# EUROPEAN PATENT APPLICATION

(11) **EP 4 060 845 A1**
(43) Date of publication of application: **21.09.2022**
(21) Application number: 21163484.5
(22) Date of filing: 18.03.2021
(51) Int. Cl.: H02H 7/06

(54) **A PROTECTION ARRANGEMENT FOR A TWO-STROKE INTERNAL COMBUSTION ENGINE PROVIDING POWER TO A GENERATOR**

(71) Applicant: WE Tech Solutions Oy, 65200 Vaasa (FI)
(72) Inventor: STORBACKA, Mårten, 65200 Vaasa (FI); ALHO, Timo, 65200 Vaasa (FI)
(74) Representative: Berggren Oy

(57) **Abstract**

An inventive protection arrangement is for a two-stroke internal combustion engine providing power to a generator having output lines (4A, 4B 4C) with circuit breakers (5A, 5B, 5C). The protection arrangement comprises a heat resistor bank (8A, 8B, 8C) and a circuit breaker (9A, 9B, 9C) for each output line (4A, 4B 4C). The circuit breaker (9A, 9B, 9C) is connected to the output line in a parallel manner with the circuit breaker (5A, 5B, 5C) of the same output line (4A, 4B 4C), and the resistor bank (8A, 8B, 8C) is connectable to the each output line (4A, 4B 4C) via the circuit breaker of the output line. The protection arrangement further comprises a control unit (11) having connections to the circuit breakers and the circuit breakers, in order to monitor the circuit breakers and to control the circuit breakers. In case the circuit breaker (5A, 5B, 5C) of at least one output line (4A, 4B 4C) is tripped to open, the control unit is arranged to control the circuit breakers (9A, 9B, 9C) of the output lines to connect the heat resistor bank (8A, 8B, 8C) to output lines (4A, 4B 4C).

## Description

### Field of technology

The invention relates to a protection arrangement for a two-stroke internal combustion engine providing power to a generator. The generator can synchronous or asynchronous.

### Prior art

Internal combustion engines like two-stroke internal combustion engine are used for electric power production by connecting a generator to the engine. The generator can be a so called shaft generator, if it is around the main/propeller shaft of the engine, or other type of generator, which can for example be connected to the flywheel of the engine. Further the generator can be a permanent magnet generator or a generator having a separate voltage regulating control system (called "AVR" for small generators and "Static exciter" for larger units) in order to magnetize the generator. The combination of the engine and the shaft generator is often referred as a generator set.

In practice, other devices are also used with the engine (often called as prime mover), such as engine control systems and protection systems.

As said, the generator connected to the internal combustion engine are used for power production. They are used in power plant or ships. In the ships the internal combustion engine may also be connected to the propulsion system of the ship, in which cases it produces power for the propulsion and the electric grid of the ship. However, the engine with the generator on the ship may be used only for production of electric power.

Four-stroke engines (four-stroke internal combustion engines) and two-stroke engines (two-stroke internal combustion engines) are used for electric power production. These engines have ability to use different fuels.

The generator is connected to the grid of the ship through a circuit breaker when the case is to operate on constant speed. And through variable frequency drive (VFD) (frequency transformer) and circuit breaker when the case is to operate in variable speed. So, the generator (like the shaft generator around the main/propeller shaft) transforms a part of the power into an electric form, which can be used in loads connected to an electrical grid of the ship. The generators are especially suitable for using cases where the load situation of the grid and therefore power production in the internal combustion engines varies, both in ships and on land.

The combination of the generator and the engine works usually fine are reliable, because they have protection and control systems for fault cases. However, there may occur situations where protection systems do not work so efficiently.

### Short description

The object of the invention is to improve protection of the two-stroke internal combustion engine that is connected to a generator to provide electric power. More precisely, the invention is a independent overspeed protection arrangement preventing the two-stroke engine from over speeding. It has been found that the two-stroke engine may over speed in some situations. When the two-stroke engine is operating as an electrical power generating unit, i.e. has only an electrical power generator as the load, and the generator (and thus also the engine) is tripped away from suppling power to the grid, the two-stroke engine may over speed too much. The object is achieved in a way described in the independent claims. Dependent claims illustrate different embodiments of the invention.

An inventive protection arrangement is for a two-stroke internal combustion engine providing power to a generator having output lines 4A, 4B 4C with circuit breakers 5A, 5B, 5C. The protection arrangement comprises a heat resistor bank 8A, 8B, 8C and a circuit breaker 9A, 9B, 9C for each output line 4A, 4B 4C. The circuit breaker 9A, 9B, 9C is connected to the output line in a parallel manner with the circuit breaker 5A, 5B, 5C of the same output line 4A, 4B 4C, and the resistor bank 8A, 8B, 8C is connectable to the each output line 4A, 4B 4C via the circuit breaker of the output line.

The protection arrangement further comprises a control unit 11 having connections to the circuit breakers and the circuit breakers, in order to monitor the circuit breakers and to control the circuit breakers. In case the circuit breaker 5A, 5B, 5C of at least one output line 4A, 4B 4C) is tripped to open, the control unit is arranged to control the circuit breakers 9A, 9B, 9C of the output lines to connect the heat resistor bank 8A, 8B, 8C to output lines 4A, 4B 4C.

So, the inventive system is designed to prevent the two-stroke engine from over-speeding if a significant part of electrical load is instantaneously disconnected due to e.g. a breaker tripping.

### List of figures

In the following, the invention is described in more detail by reference to the enclosed drawings, where
- Figure 1: illustrates a schematic example of a protection arrangement according to the invention,
- Figure 2: illustrates how a resistor bank provides a counter torque as function of generator speed, and
- Figure 3: illustrates an example of an activation of the resistor bank in case the two-stroke engine runs at full speed with full load,

### Description of the invention

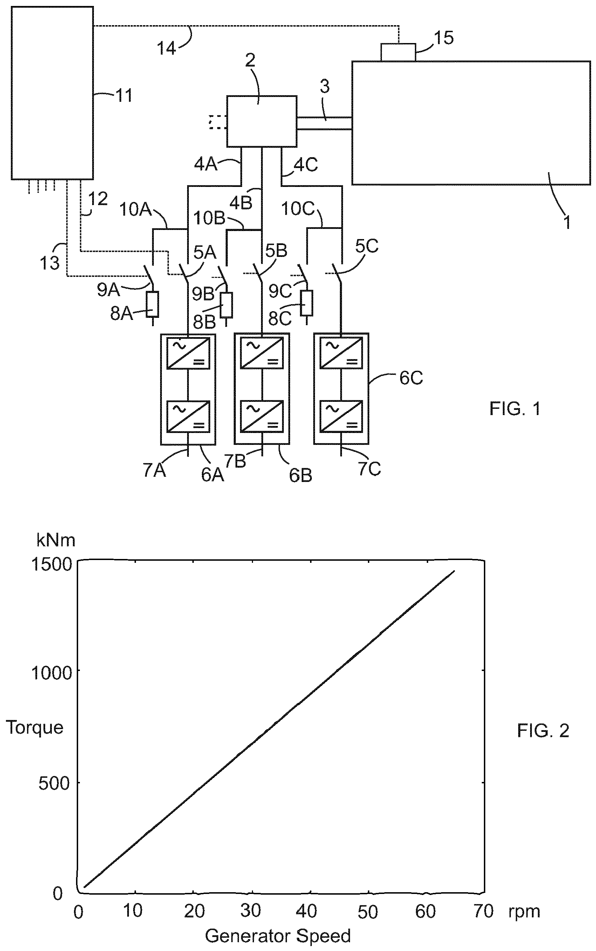

Figure 1 illustrates a schematic example of a protection arrangement according to the invention. It is noted that figure 1 shows different part of the arrangement only schematically, and real solutions may have a more complicated structure. The schematic illustration has been chosen to be better for the purpose of representing the invention.

An inventive protection arrangement is for a two-stroke internal combustion engine providing power to a generator having output lines 4A, 4B 4C with circuit breakers 5A, 5B, 5C. The generator can a synchronous generator or an asynchronous generator. The protection arrangement comprises a heat resistor bank 8A, 8B, 8C and a circuit breaker 9A, 9B, 9C for each output line 4A, 4B 4C. The circuit breaker 9A, 9B, 9C is connected to the output line in a parallel manner with the circuit breaker 5A, 5B, 5C of the same output line 4A, 4B 4C, and the resistor bank 8A, 8B, 8C is connectable to each output line 4A, 4B 4C via the circuit breaker of the output line.

The main/propeller shaft 3 of the engine has no other load than the generator 2. So, the most part of the load of the two-stroke engine 1 is electrical load (a minor part being mechanical friction and rotating masses of the engine 1 and the generator 2.

In case of an embodiment of the shaft generator, the embodiment may also comprise a gearing, e.g. a step-up gear or planetary gear. Such embodiment can be used to increase the speed of the generator and to lower the torque and consequently to decrease the size of the generator.

The protection arrangement further comprises a control unit 11 having connections 12, 13 to the circuit breakers and the circuit breakers, in order to monitor the circuit breakers and to control the circuit breakers. In case the circuit breaker 5A, 5B, 5C of at least one output line 4A, 4B 4C is tripped to open, the control unit is arranged to control the circuit breakers 9A, 9B, 9C of the output lines to connect the heat resistor bank 8A, 8B, 8C to output lines 4A, 4B 4C.

The circuit breakers 5A, 5B, 5C are in connection with frequency transformers 6A, 6B 6C, which are not part of the invention as such. As can be seen each output line 4A, 4B, 4C has its own frequency transformer. Figure 1 can illustrate triple three-phase system where one line 4A, 4B, 4C means actually lines for three phases, which is also a common way to illustrate triple three-phase system.

Different embodiments can have two or more parallel three-phase output lines from the generator. Smaller systems might have only single three-phase systems while larger systems can have two, three, four or more parallel three-phase systems (i.e. the generator is built with single, dual, triple, quad or more winding configurations).

The outputs 7A, 7B, 7C of the frequency transformers are, for example connected to a main circuit breaker board of a system, like a ship electrical power distribution system or any other electrical power distribution system on land for example for power distribution.

As said the protection arrangement according to the invention comprises a heat resistor bank 8A, 8B, 8C and a circuit breaker 9A, 9B, 9C for each output line. Each circuit breaker is connected 10A, 10B, 10C to the respective output line in a parallel manner with the circuit breaker of the same output line, and the resistor bank 8A, 8B, 8C is connectable to each output line via the circuit breaker of the output line. So, the resistor bank for each three-phase output has three resistor units 8A, 8B, 8C, which can be connected to a triangle or star form. In other words, each three-phase output line has a three-phase resistor bank which is connected in either triangle or star form.

It is worth to mention that there are different arrangements to protect the generator and different arrangements to control the speed/load of the two-stroke engine, like an engine controller and a protection relay system. The invention is another system for protecting the engine from over speeding.

The engine speed/load control system performs the tasks of injecting correct amount of fuel as a function of speed and load as well as keeping the engine speed, and consequently load, stable. Further the engine speed/load control system also incorporates a primary overspeed protection function which cuts fuel injection at a parameterised trigger point. The invention provides a secondary overspeed protection system which is an independent system, the invention will actuate if the primary overspeed system didn't react. This kind of situation may happen when the circuit breakers are tripped for some reasons. The control unit have a connection with the engine speed/load control system and communicates a trip/electrical fault situation to the engine speed/load control system.

The invention provides information to the engine speed/load control system (i.e. to the other system than the invention) to cut fuel injection and also provides time to burn the remaining fuel in the engine while preventing the engine from overspeed by inducing torque to the system from the resistor bank.

The control unit 11 can be further arranged to be connectable to other controllers/systems (like a frequency transformer controller) in order to communicate said trip/electrical fault situation to the other controllers/systems. In addition, the control unit may receive info from said engine speed/load control system and the other controllers/systems.

As can be noted, the invention is used in a system having many components and devices. In order to identify possible failure modes and fault effects in the system, the invention can be connected to the other devices, as said engine speed/load control system and the other controllers, although the inventive system acts independently. So, failure mode and effects analysis (FMEA) is possible. So, when the circuit breaker/s is/are tripped, for example in fault and other harmful or dangerous situations, the control unit 11 of the invention receives the info from the tripping action/s and controls the circuit breakers 9A, 9B, 9C of the output lines to connect the resistor bank 8A, 8B, 8C to each output lines as response to the tripping action/s. Each resistor bank consists of 3 resistors / resistor constructions connected between the generator phases either in delta or star connection.

The resistance value of the heat resistor bank is dimensioned so that resistor bank 8A, 8B, 8C provides enough counter torque for the two-stroke engine 1 at least two second in order to provide time for the engine speed/load control system to cut fuel injection to the two-stroke engine 1, and also time to burn remaining fuel in the two-stroke engine while preventing the engine from overspeed situation.

In order to keep figure 1 clear the connections 12 between the circuit breakers and the control and protection system 11, the connections 13 between the circuit breakers and the control and protection system 11 are illustrated for one output line 4A, i.e. for the circuit breaker 5A and the circuit breaker 9A. The similar connections for the other output lines are illustrated using short dashed lines.

The control unit 11 is illustrated schematically. It can be one entity or distributed entity depending on practical embodiments.

As said the heat resistors of the resistor bank are utilized on the generator output lines, the resistors are connected only in case of significant electric load reduction situation. The resistors are dimensioned so that the counter torque provided by them restricts the speed rise of the two-stroke engine for reasonable amount of time ,e.g. at least 2 seconds, (for example between 2 - 3 seconds) so that the engine control system has enough time to cut fuel injection and the engine can burn remaining fuel without over speeding too high.

Figure 2 shows function of generator speed and counter torque provided by the resistor bank 8A, 8B, 8C. In this example the frequency transformer system (one frequency transformer system is 1/3 of total power per shaft generator) rated power is 3MW and the resistor bank's rated power 33% of that, i.e. around 1 MW.

The overall counter torque induced by the inventive over-speed protection system is not dependent on a power grid load situation prior to the tripping of at least one circuit breaker. The power grid can be a ships grid or a grid connected to a power plant on land. As the power of the resistor bank is only dependent on the generator torque, which is a function of power and speed, the generator torque is defining how much counter torque the resistor bank shall induce to the engine.

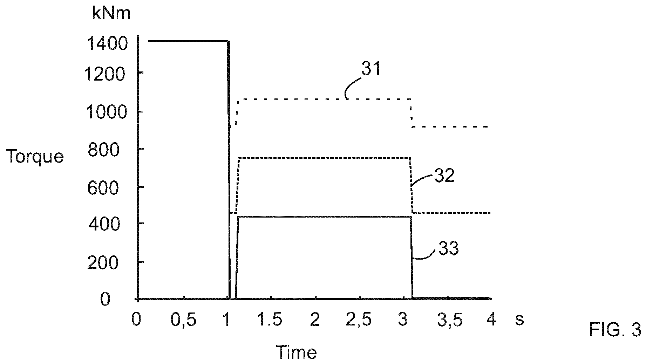

Figure 3 shows an example where the generator speed and load (load of the electrical power grid) are at the rated values, i.e. the engine is running at the generator's rated speed (full speed) and load of the grid is full.

At 1 second mark the tripping of electrical load situations happen, i.e. either 1, 2 or all 3 frequency transformer systems drop out for any reason, then after short reaction time the over-speed protection system activates for two seconds, in other words the circuit breakers 9A, 9B and 9C are closed for two seconds in order to connect the resistor bank to the output lines. After the two seconds the circuit breakers are opened. Line 31 shows the situation where one frequency transformer system is tripped. Line 32 shows the situation where two frequency transformer systems are tripped. Line 33 shows the situation where three frequency transformer systems are tripped. As can be noted, the torque on the generator drops after three seconds to the load level remaining in the system, a level which is depending on how much electrical load remains after a tripping situation i.e. zero, one or two frequency transformer systems remain online. It shall be noted that the example in figure 3 is only indicative. In a ships electrical power distribution system the remaining electrical load is also depending on the actual consumption onboard a ship. The control system 11 might or might not sequence the closing times of the circuit breakers 9A, 9B and 9C in order to smoothen the torque induction to the generator system. This is due to the actions that the fuel injection of the engine has ended and the remaining fuel has been burned in the engine.

During the reaction time between one frequency transformer system dropping out and over-speed protection system activating, the load on the generator is not changing at all as the other 2 frequency transformer systems possibly can compensate for the loss of one frequency transformer system. (Presuming that 1/3 of the load is picked up by the remaining 2/3rds which are online). The engine speed/load controller may react to this by noticing the situation. In this scenario the resistor bank is not engaged - as it won't be needed. This way the grid stays as stable as possible.

As can be noted the generating system can operate in variable speed and with variable load.

The invention provides a reliable additional over-speed protection for the generator set arrangement having the two-stroke engine, and the generator connected to the two-stroke engine. Although the examples above are dimensioned for a certain power of the shaft generator and the two-stroke engine, it is clear that other dimensioning scales can also be used.

It is evident from the above that the invention is not limited to the embodiments described in this text but can be implemented in many other different embodiments within the scope of the independent claims.

## Claims

1. A protection arrangement for a two-stroke internal combustion engine providing power to a synchronous or asynchronous generator having output lines (4A, 4B 4C) with circuit breakers (5A, 5B, 5C), **characterised in that** the protection arrangement comprises a heat resistor bank (8A, 8B, 8C) and a circuit breaker (9A, 9B, 9C) for each output line (4A, 4B 4C), the circuit breaker being connected to the output line in a parallel manner with the circuit breaker (5A, 5B, 5C) of the same output line (4A, 4B 4C), and the resistor bank (8A, 8B, 8C) being connectable to the each output line (4A, 4B 4C), via the circuit breaker of the output line,
the protection arrangement further comprising a control unit (11) having connections to the circuit breakers and the circuit breakers, in order to monitor the circuit breakers and to control the circuit breakers, and
in case the circuit breaker (5A, 5B, 5C) of at least one output line (4A, 4B 4C) is tripped to open, the control unit is arranged to control the circuit breakers (9A, 9B, 9C) of the output lines to connect the heat resistor bank (8A, 8B, 8C) to output lines (4A, 4B 4C).

2. A protection arrangement according to claim 1, **characterised in that** resistor bank (8A, 8B, 8C) has three resistor units connected in a triangle or star form in each three-phase system of the output lines.

3. A protection arrangement according to claim 2, **characterised in that** each of three resistor units (8A, 8B, 8C) comprise one or several resistors in parallel or in series.

4. A protection arrangement according to any of claims 1 - 3, **characterised in that** resistance value of the resistor bank (8A, 8B, 8C) is dimensioned so that resistor bank provides enough counter torque for the two-stroke engine (1) at least two second in order to provide time to cut fuel injection to the two-stroke engine (1) and also time to burn remaining fuel in the two-stroke engine.

5. A protection arrangement according to any of claim 1 - 4, **characterised in that**. The control unit (11) have a connection (14) with the engine speed/load control system (15) and communicates a trip/electrical fault situation to the engine speed/load control system,
and connections (12, 13) to the circuit breakers and the circuit breakers, in order to monitor the circuit breakers and to control the circuit breakers, and
the control unit is arranged to control the circuit breakers (9A, 9B, 9C) of the output lines to connect the heat resistor bank (8A, 8B, 8C) to output lines (4A, 4B 4C), when the circuit breaker/s is/are tripped, and the control unit 11 of the invention receives the info from the tripping action/s.

6. A protection arrangement according to claim 6, **characterised in that** the control unit is further arranged to be connectable to other controllers/systems in order to communicate said trip/electrical fault situation to the other controllers/systems.
